(19) Europäisches Patentamt
European Patent Office
Office européen des brevets

(11) **EP 4 244 646 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **21783215.3**

(22) Anmeldetag: **23.09.2021**

(51) Internationale Patentklassifikation (IPC):
*G01S 7/03* $^{(2006.01)}$    *G01S 7/40* $^{(2006.01)}$
*G01S 13/34* $^{(2006.01)}$    *G01S 13/88* $^{(2006.01)}$

(52) Gemeinsame Patentklassifikation (CPC):
**G01S 13/88; G01S 7/03; G01S 7/4004; G01S 13/343**

(86) Internationale Anmeldenummer:
**PCT/EP2021/076264**

(87) Internationale Veröffentlichungsnummer:
**WO 2022/100915 (19.05.2022 Gazette 2022/20)**

(54) **FÜLLSTANDSMESSGERÄT**

FILL-LEVEL MEASURING DEVICE

DISPOSITIF DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2020 DE 102020129764**

(43) Veröffentlichungstag der Anmeldung:
**20.09.2023 Patentblatt 2023/38**

(73) Patentinhaber: **Endress+Hauser SE+Co. KG**
**79689 Maulburg (DE)**

(72) Erfinder: **KOCHETKOV, Anton**
**79539 Lörrach (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
KR-A- 20140 059 084    US-A- 4 539 565
US-A- 6 014 100

**Beschreibung**

Die Erfindung betrifft ein Füllstandsmessgerät, das hinsichtlich seiner Taktung kompensierbar ist.

In der Automatisierungstechnik, insbesondere zur Prozessautomatisierung sind je nach Prozess eine Vielzahl unterschiedlicher Messgrößen zu bestimmen. Dabei kann es sich je nach Anwendung beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte werden hierfür konzipierte Feldgeräte eingesetzt, die auf jeweils geeigneten Sensoren bzw. auf geeigneten Messprinzipien basieren. Diverse Feldgeräte-Typen werden von der Firmen-Gruppe Endress + Hauser hergestellt und vertrieben.

Zur Füllstandsmessung von Füllgütern in Behältern haben sich Radar-basierte Messverfahren etabliert. Dabei beziehen sich die Begriffe "*Radar*" bzw. *"Hochfrequenz"* im Kontext dieser Patentanmeldung auf entsprechende Signale mit Frequenzen zwischen 0.03 GHz und 300 GHz. Übliche Frequenzbänder, bei denen Füllstandsmessung durchgeführt wird, liegen bei 2 GHz, 26 GHz, 79 GHz, oder 120 GHz. Neben der Robustheit und Wartungsfreundlichkeit bietet Radar-basierte Füllstandsmessung im Vergleich zu anderen Messmethoden den Vorteil, den Füllstand quasi kontinuierlich messen zu können.

Im Falle von Radar bildet das FMCW-Prinzip ("*Frequency Modulated Continuous Wave")* das gängigste Messprinzip zur Abstands- bzw. Füllstandsmessung. Grundsätzlich beruht dieses Messprinzip darauf, ein Hochfrequenz-Signal kontinuierlich und mit modulierter Frequenz auszusenden. Dabei liegt die Frequenz des auszusendenden Hochfrequenz-Signals in dem festgelegten Frequenzband im Bereich einer standarisierten Mittenfrequenz. Die zeitliche Änderung der Frequenz ist bei FMCW standardmäßig linear und weist dementsprechend eine Rampen- beziehungsweise Dreiecks-Form auf. Eine Sinus-förmige Änderung kann prinzipiell jedoch auch umgesetzt werden. Erzeugt wird das Hochfrequenz-Signal innerhalb einer Signalerzeugungs-Einheit des Füllstandsmessgerätes in der Regel durch eine PLL ("*Phase Locked Loop"* im Deutschen auch als Phasen-Regelschleife bekannt). Dabei erzeugt die PLL das von der Frequenz her sägezahnförmige Hochfrequenz-Signal mit Referenz zu einer konstanten, internen Taktfrequenz $clk_1$, wie beispielsweise einem Quarz-Oszillator.

Der Abstand d zum Füllgut bzw. der Füllstand wird bei Implementierung des FMCW-Verfahrens auf Basis der instantanen Frequenzdifferenz $f_{IF}$ zwischen dem aktuell empfangenen Hochfrequenz-Signal und dem momentan ausgesendeten Hochfrequenz-Signal bestimmt, indem durch Mischen der entsprechenden elektrischen Hochfrequenz-Signale ein Basissignal generiert wird. Dabei kann der Abstand d anhand der Frequenz $f_{IF}$ des Basissignals ermittelt werden, da sich die Frequenz $f_{IF}$ des Basissignals proportional zum Abstand d ändert. Dabei ist c die Lichtgeschwindigkeit, k repräsentiert die Rampensteilheit der Frequenz-Änderung. Die Frequenz $f_{IF}$ des Basissignals kann beispielsweise ermittelt werden, indem das Basissignal mit einer definierten Abtastrate $clk_2$ digitalisiert und anschließend einer Fast Fourier Transformation unterzogen wird. Ein nach diesem Wirkprinzip arbeitendes Füllstandsmessgerät ist beispielsweise in der Veröffentlichungsschrift US 6 014 100 A beschrieben. Näher beschrieben wird das FMCW-basierte Messprinzip zur Füllstandsmessung außerdem in *"Radar Level Detection, Peter Devine, 2000"*.

Auf Basis des FMCW-Verfahrens können Füllstandsmessgeräte im Idealfall mit schaltungstechnisch vergleichsweise geringem Aufwand eine hohe Füllstands-Auflösung erreichen, um somit je nach Einsatzgebiet eine geforderte Auflösung im Sub-Millimeterbereich zu erreichen. Jedoch wird die Auflösung in der Praxis oftmals durch diverse Bauteil-Toleranzen limitiert. Im Falle von FMCW sind es insbesondere Bauteiltoleranzen hinsichtlich interner Taktfrequenzen, die zu einem entsprechenden Messfehler bei der Füllstandsmessung führen. Eine Messgeräte-interne Kompensation der Messfehler, die durch die Abweichung der Taktfrequenzen von den Sollfrequenzen entsteht, ist jedoch wiederum schwer realisierbar. Denn schaltungstechnisch ist eine direkte Frequenzmessung nicht möglich, sondern nur indirekt durch Messung des Verhältnisses der Ist-Frequenz in Bezug zu einer bekannten Referenzfrequenz. Die Integration einer Referenzquelle, deren Referenzfrequenz quasi keine Bauteilbedingten Toleranzen aufweist, ist wirtschaftlich jedoch nicht umsetzbar.

Der Erfindung liegt daher die Aufgabe zugrunde, ein Füllstandsmessgerät bereitzustellen, dessen Toleranzen hinsichtlich interner Taktungen kompensierbar sind, um Messfehler zu minimieren.

Die Erfindung löst diese Aufgabe durch ein FMCW-basiertes Füllstandsmessgerät zur Messung eines kompensierten Füllstandswertes eines Füllgutes in einem Behälter, wobei das Füllstandsmessgerät hierzu folgende Komponenten umfasst:

- Eine Antennen-Anordnung, mittels welcher ein Hochfrequenz-Signal gen Füllgut sendbar und nach Reflektion an der Füllgut-Oberfläche als Empfangs-Signal empfangbar ist,
- Eine Signalerzeugungs-Einheit, die beispielsweise als PLL ausgelegt ist, um das Hochfrequenz-Signal gemäß des FMCW-Prinzips mit Referenz zu einer definierten Taktrate zu erzeugen,
- Einer Empfangs-Einheit, die ausgelegt ist,

    ○ um das Empfangs-Signal gemäß des FMCW-Prinzips in ein niederfrequentes Basissignal herunterzumischen, und

◦ um das Basissignal mit einer definierten Abtastrate abzutasten,

- eine Auswertungs-Einheit, die ausgelegt ist,

◦ um anhand des abgetasteten Basissignals beispielsweise mittels einer Fourier-Transformation einen Abstandswert zum Füllgut zu ermitteln,
◦ um den Abstandswert mittels eines ersten Kompensationsfaktors und/oder eines zweiten Kompensationsfaktors zu kompensieren, und
◦ um anhand des kompensierten Abstandswertes den kompensierten Füllstandswert zu bestimmen, und

- eine Diagnose-Einheit, die ausgelegt ist, um

◦ den ersten Kompensationsfaktor mittels Vergleich der Taktrate mit der Abtastrate zu ermitteln, und/oder
◦ um mittels Vergleich der Taktrate und/oder der Abtastrate mit einer Referenzfrequenz und/oder dem ersten Kompensationsfaktor den zweiten Kompensationsfaktor zu ermitteln, und
◦ um den ersten Kompensationsfaktor bzw. den zweiten Kompensationsfaktor nach Ermittlung an die Auswertungs-Einheit zu übertragen.

Dabei kann das Füllstandsmessgerät zu einer etwaigen Übertragung des ersten Kompensationsfaktors, des zweiten Kompensationsfaktors, der Taktrate, der Abtastrate und/oder einer Referenzfrequenz eine geeignete (Fertigungs-) Schnittstelle umfassen.

Unter dem Begriff *"Einheit"* wird im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie ein FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. physikalisch mittels derselben Digitalschaltung betrieben werden.

Analog zum erfindungsgemäßen Füllstandsmessgerät wird die Aufgabe, die der Erfindung zugrunde liegt, außerdem durch ein entsprechendes Mess-Verfahren zur Bestimmung des Füllstandes gelöst. Dabei umfasst das Verfahren folgende Verfahrensschritte:

- Ermittlung des ersten Kompensationsfaktors durch Vergleich der Taktrate mit der Abtastrate, und/oder
- Ermittlung des zweiten Kompensationsfaktors durch Vergleich der Taktrate und/oder der Abtastrate mit der Referenzfrequenz.

Die Erfindung macht sich also zunutze, dass das Füllstandsmessgerät im Zweifelsfall auch ohne externe Referenzquelle bezüglich potenzieller interner Taktabweichungen zumindest bis zu einem gewissen Grad kompensiert werden kann, indem die Taktrate mit der Abtastrate verglichen wird. Dabei wird die Taktrate ($clk_1$) und die Abtastrate ($clk_2$) im Rahmen der Erfindung miteinander verglichen, indem gemäß

$$R_{2,1} = \frac{clk_2}{clk_1}$$

ein Verhältnis ($R_{2,1}$) der Raten ($clk_1$, $clk_2$) zueinander ermittelt wird. In diesem Fall wird der erste Kompensationsfaktor $k_1$ gemäß

$$k_1 = R_{2,1} * \frac{clk_{1,soll}}{clk_{2,soll}}$$

berechnet, wobei es sich bei $clk_{1,2soll}$ um die jeweiligen Sollwerte der Taktrate bzw. der Abtastrate handelt.
Analog hierzu werden die Taktrate ($clk_1$) und die Abtastrate ($clk_2$) jeweils auch mit einer externen Referenzfrequenz ($clk_{ref}$) verglichen, indem gemäß

$$R_{1,ref} = \frac{clk_1}{clk_{ref}} \; ; \; R_{2,ref} = \frac{clk_2}{clk_{ref}}$$

Verhältnisse ($R_{1,ref}$, $R_{2,ref}$) der Raten ($clk_1$, $clk_2$) zur Referenzfrequenz ($clk_{ref}$) ermittelt werden. In diesem Fall wird der zweite Kompensationsfaktor ($k_2$) gemäß

$$k_2 = \left( \frac{clk_{1,soll}}{R_{1,ref} * clk_{ref}} \right)^2 \cdot \frac{R_{2,ref} * clk_{ref}}{clk_{2,soll}}$$

berechnet.

Vorteilhaft an dem erfindungsgemäßen Verfahren ist, dass der erste Kompensationsfaktor fortlaufend aktualisiert werden kann. Das heißt, dass die Analyse-Einheit bei dieser Auslegungsvariante den ersten Kompensationsfaktor wiederkehrend während bzw. zwischen fortlaufenden Füllstandsmessungen ermittelt. Bei solch einer Auslegung des Füllstandsmessgerätes kann dieses als funktionstüchtig eingestuft werden, solange der erste Kompensationsfaktor über die fortlaufen Füllstandsmessungen einen initial definierten Mindest-Änderungswert nicht überschreitet. Im anderen Fall könnte beispielsweise ein Warnsignal generiert werden, um beispielsweise einer Prozessleitstelle die Funktionsuntüchtigkeit zu signalisieren. Vorteilhaft an einer fortdauernden Neubestimmung des ersten Kompensationsfaktors ist außerdem, dass der ermittelte Füllstandswert bei entsprechender Auslegung des Füllstandsmessgerätes beispielsweise gemäß der Normenreihe EN ISO 9001:2015 DIN als rückführbar gilt.

Insbesondere, sofern im Füllstandsmessgerät keine Referenz-Quelle zur Generierung einer hochgenauen Referenzfrequenz implementiert ist, kann der etwaige zweite Kompensationsfaktor während der Fertigung des Füllstandsmessgerätes auf Basis einer externen Referenzfrequenz ermittelt werden, indem beispielsweise die Taktrate und/oder der Abtastrate jeweils mit der Referenzfrequenz der externen Referenz-Quelle verglichen wird. Dabei kann der zweite Kompensationsfaktor entweder durch eine externe Einheit berechnet werden, wobei der zweite Kompensationsfaktor in diesem Fall der Auswertungs-Einheit über die Fertigungs-Schnittstelle zu übertragen ist. Andernfalls kann die Referenzfrequenz über die Fertigungs-Schnittstelle auf die Analyse-Einheit übertragen werden, so dass der zweite Kompensationsfaktor in diesem Fall innerhalb des Füllstandsmessgerätes durch die Analyse-Einheit berechnet wird.

Anhand der nachfolgenden Figuren wird die Erfindung näher erläutert. Es zeigt:

　　Fig. 1: Ein FMCW-basiertes Füllstandsmessgerät an einem Behälter,
　　Fig. 2: ein Blockschaltbild des erfindungsgemäßen Füllstandsmessgerätes, und
　　Fig. 3: Eine Phasenregelschleife zur Erzeugung des Hochfrequenz-Signals.

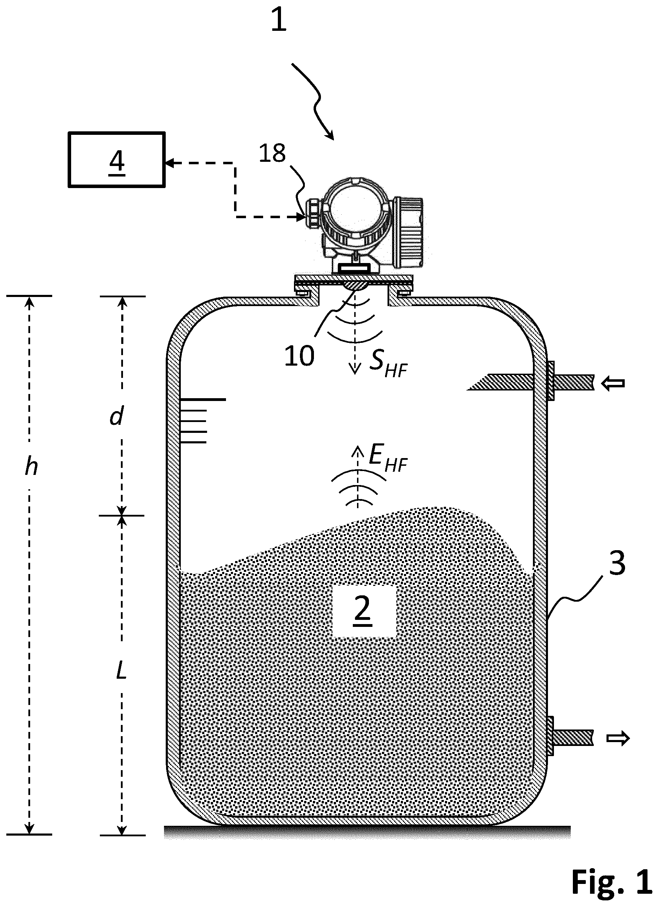

Zum prinzipiellen Verständnis von Radar-basierter Füllstandsmessung ist in Fig. 1 ein Behälter 3 mit einem Füllgut 2 gezeigt, dessen Füllstand L zu bestimmen ist. Dabei kann der Behälter 3 je nach Art des Füllgutes 2 und Einsatzgebiet bis zu mehr als 100 m hoch sein. Um den Füllstand L ermitteln zu können, ist ein Füllstandsmessgerät 1 in einer bekannten Einbauhöhe h oberhalb des Füllgutes 2 an einer entsprechenden Öffnung am Behälter 3 angebracht. In der Regel ist das Füllstandsmessgerät 1 über eine Schnittstelle, etwa "PROFIBUS", "HART" oder "Wireless HART" mit einer übergeordneten Einheit 4, wie z. B. einem Prozessleitsystem, verbunden. Hierüber kann der ermittelte Füllstands-Wert L übertragen werden, beispielsweise um gegebenenfalls Zu- oder Abflüsse des Behälters 3 zu steuern. Es können aber auch anderweitige Informationen über den allgemeinen Betriebszustand des Füllstandsmessgerätes 1 kommuniziert werden.

Am Behälter 3 ist das Füllstandsmessgerät 1 so ausgerichtet und befestigt, dass es über eine Antennen-Anordnung 10 Hochfrequenz-Signale $S_{HF}$ in etwa entlang einer horizontal ausgerichteten Achse in Richtung der Oberfläche des Füllgutes 2 aussendet. Dabei weist das Hochfrequenz-Signal $S_{HF}$ gemäß des FMCW-Prinzips innerhalb eines definierten Frequenzbandes von beispielsweise 79 GHz bis 81 GHz eine zeitlich konstante Frequenzänderung auf, so dass sich innerhalb des Frequenzbandes zeitlich ein sägezahn -oder dreiecksförmiger Frequenz-Verlauf ergibt.

Nach Reflektion an der Füllgut-Oberfläche empfängt das Füllstandsmessgerät 1 die reflektierten Radar-Signale $E_{HF}$ wiederum über die Antennen-Anordnung 10. Dabei ist die Frequenz-Differenz $f_{IF}$ zwischen dem momentan ausgesendeten Hochfrequenz-Signal $S_{HF}$ und dem instantan Empfangs-Signal $E_{HF}$ aufgrund der FMCW-prinzipbedingten Frequenzänderung proportional zum Abstand d zwischen Füllstandsmessgerät 1 und dem Füllgut 2. Dementsprechend kann das Füllstandsmessgerät 1 beispielsweise auf Basis einer entsprechenden Kalibration die gemessene Frequenzdifferenz $f_{IF}$ dem jeweiligen Abstand d zuordnen. Hierüber kann das Füllstandsmessgerät 1 gemäß

$$d = h - L$$

den Füllstand L bestimmen, sofern die Einbauhöhe h im Füllstandsmessgerät 1 hinterlegt ist.

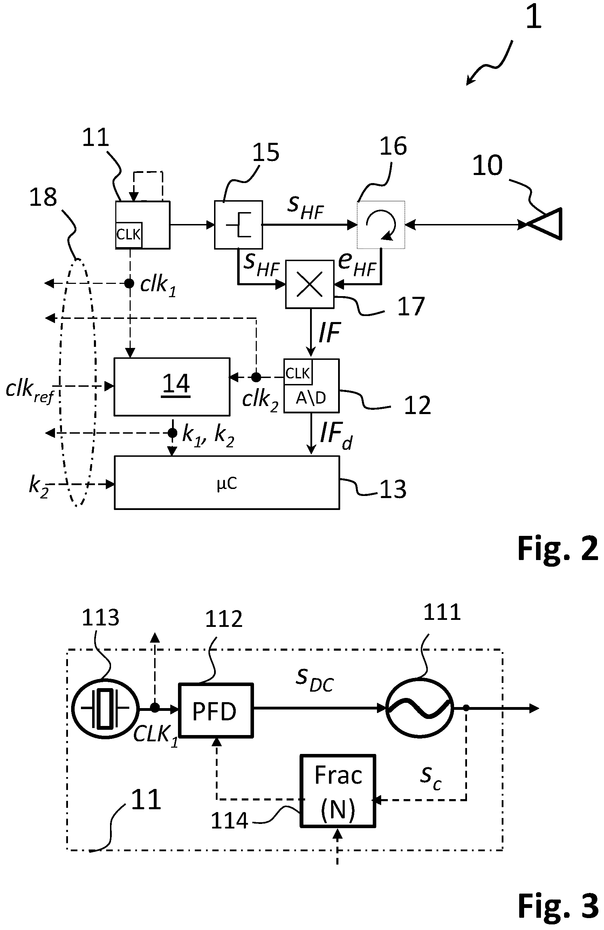

Eine Schaltung, mittels der das Füllstandsmessgerät 1 das FMCW-Prinzip zur Füllstandsmessung umsetzen kann, ist als Blockschaltbild in Fig. 2 näher dargestellt: Zur Erzeugung des Hochfrequenz-Signals $S_{HF}$ umfasst das Füllstandsmessgerät 1 eine Signalerzeugungs-Einheit 11, die ausgelegt ist, um das Hochfrequenz-Signal ($s_{HF}$) gemäß des FMCW-Prinzips im entsprechenden Frequenzband mit einer rampen- oder dreiecksförmigen Frequenzänderung zu erzeugen. Dabei wird das Hochfrequenz-Signal $s_{HF}$ so erzeugt, dass sich die rampenförmige, also konstante Frequenz-Änderung periodisch innerhalb des Frequenzbandes wiederholt. Standardmäßig wiederholt sich die Frequenzrampe mit einer Periodizität von einigen 100 ms. Die Dauer der einzelnen Frequenzrampe beträgt hierbei zwischen 100 μs und 100 ms. Dabei ist die Lage des Frequenzbandes unter Berücksichtigung regulatorischer Vorgaben einzustellen, weswegen als Frequenzband vorzugsweise die ISM-Bänder bei 6 GHz, 26 GHz, 79 GHz oder 120 GHz implementiert sind. Die Bandbreite liegt je nach Lage des Frequenzbandes insbesondere zwischen 0,5 GHz und 10 GHz. Höhere Frequenzbänder sind allgemein bevorzugt, da diese eine höhere absolute Bandbreite erlauben. Hierdurch erhöht sich wiederum die potenzielle Genauigkeit der Messung.

Nach dem Stand der Technik wird die Signalerzeugungs-Einheit 11 standardmäßig als PLL (*"Phase Locked Loop, PLL"*, im Deutschen auch als Phasenregelschleife bekannt) umgesetzt, wie es in Fig. 3 dargestellt ist. Kern der dortigen Schaltung ist ein steuerbarer, elektrischer Hochfrequenz-Oszillator 111, (standartmäßig als *"Voltage Controlled Oscillator"* realisiert), der das elektrische Hochfrequenz-Signal $s_{HF}$ erzeugt. Die Frequenz des VCO bzw. des Hochfrequenz-Signals $s_{HF}$ wird in der gezeigten Signalerzeugungs-Einheit 11 per Rückkopplung geregelt und somit einerseits gegenüber Schwankungen der Umgebungstemperatur stabilisiert; Andererseits wird hierüber die konstante Frequenzänderung des Hochfrequenz-Signals $s_{HF}$ eingestellt: Die Rückkopplung wird realisiert, indem aus dem Hochfrequenz-Signal $s_{HF}$ des Hochfrequenz-Oszillators 111 ein Regelsignal $s_c$ abgezweigt und einem Phasenkomparator 112 zugeführt wird. Der Phasenkomparator 112 vergleicht die momentane Phasenverschiebung des Regelsignals $s_c$ zu einer frequenzkonstanten Taktrate $clk_1$. Als Quelle für die Taktrate $clk_1$ kann beispielsweise ein Quarzoszillator 113 eingesetzt werden, welcher eine Taktrate $clk_1$ von üblicherweise zwischen 10 MHz und 100 MHz erzeugt. In Abhängigkeit der Phasendifferenz zwischen dem Regelsignal $s_c$ und dem Quarzoszillator 113 erzeugt der Phasenkomparator 112 ein Steuersignal $s_{DC}$, welches zu einem entsprechenden Steuereingang des Hochfrequenz-Oszillators 111 geführt wird. Sofern der Hochfrequenz-Oszillator 111 als VCO ausgelegt ist und dementsprechend zur Steuerung der Frequenz des Hochfrequenz-Signals $s_{HF}$ eine Gleichspannung benötigt, kann dem digitalen Phasenkomparator 112 eine Ladungspumpe (im Englischen bekannt als "Charge Pump") nachgeschaltet werden, welche eine entsprechende Digital-/Analog-Wandlung des Steuersignals $s_{DC}$ durchführt.

Die bei FMCW-Radar übliche, rampenförmige Frequenzänderung des Hochfrequenz-Signals $s_{HF}$ wird bei der in Fig. 3 beschriebenen Variante der Hochfrequenz-Erzeugungseinheit 11 an einem Frequenzteiler 114 eingestellt, der im Signalpfad zwischen dem Hochfrequenz-Oszillator 111 und dem Phasenkomparator 112 angeordnet ist: Hierzu wird dieser als *"Fractional-N Divider"* bekannte Frequenzteiler 114 nach dem Stand der Technik so angesteuert, dass sich dessen Teilerfaktor N zeitlich konstant, also quasi rampenförmig verändert. Die kleinste auflösbare Frequenzauflösung bei Fractional-N Dividern hängt von der Wortbreite N ab, sie liegt bei 20 - 32 Bit.

Durch das Wirkprinzip der in Fig. 3 gezeigten PLL wird die Frequenzrampe des resultierenden Hochfrequenzsignals $s_{HF}$ somit in Referenz zur Taktfrequenz $clk_1$ des Quarzoszillators 113 erzeugt.

Wie in Fig. 2 gezeigt wird, führt die Signalerzeugungs-Einheit 11 das auszusendende Hochfrequenz-Signal $S_{HF}$ über einen Signalteiler 15 und eine anschließende Sende-/Empfangsweiche 16 der Antennen-Anordnung 10 zu. Dabei ist die Auslegung der Sende-/Empfangsweiche 16 prinzipiell nicht fest vorgegeben, sie kann beispielsweise als Duplexer realisiert werden. Die Auslegung der Antennen-Anordnung 10 ist primär in Abhängigkeit des Frequenzbandes zu wählen. Bei Frequenzen im einstelligen GHz-Bereich kann als Antennen-Anordnung 10, wie in Fig. 2 schematisch angedeutet ist, beispielsweise eine Hornantenne eingesetzt werden. Insbesondere im höheren zweistelligen GHz-Bereich kann auch eine kompaktere Planar-Antenne, wie beispielsweise eine Patch-Antenne oder eine Fraktal-Antenne eingesetzt werden.

Das empfangene Radar-Signal $E_{HF}$, welches von der Füllgut-Oberfläche reflektiert ist, wird durch die Antennen-Anordnung 10 in ein rein elektrisches Empfangssignal $e_{HF}$ zurückgewandelt und gegebenenfalls durch einen Empfangsverstärker verstärkt (nicht in Fig. 2 dargestellt). Im Anschluss wird das Empfangssignal $e_{HF}$ mittels eines Mischers 17 mit dem auszusendenden Hochfrequenz-Signal $s_{HF}$ heruntergemischt, wobei das Hochfrequenz-Signal $s_{HF}$ hierfür aus dem Signalteiler 15 abgezweigt wird. Hierdurch wird ein beim FMCW-Verfahren typisches Basissignal IF erzeugt, mittels dem der Abstand d bzw. der Füllstand L ermittelbar ist. Dabei wird das FMCW-Prinzip genutzt, wonach die resultierende Frequenz $f_{IF}$ des Basissignals IF gemäß

$$d = \frac{c \cdot f_{IF}}{2 \cdot k \cdot clk_1^2}$$

proportional zum Abstand d ist.

Zur Bestimmung der Frequenz $f_{IF}$ des Basissignals IF digitalisiert ein Analog-/DigitalWandler 12 das Basissignal IF. Um das Abtast-Theorem einzuhalten, tastet der Analog-/Digital-Wandler 12 das Basissignal IF vorzugsweise mit einer Abtastfrequenz $clk_2$ ab, welche mindestens dem Doppelten der zum Abstand d korrespondierenden Frequenz $f_{IF}$ des Basissignals IF entspricht. Somit kann eine entsprechend ausgelegte Auswertungs-Einheit 13 das digitalisierte Basissignal einer (Fast-) Fourier-Transformation, kurz FFT unterziehen. Dabei entspricht die Frequenz des globalen Maximums des entsprechenden FFT-Spektrums im Idealfall dem Abstand d.

Wie aus der vorigen Formel hervorgeht, ist es zur korrekten Bestimmung des Abstandes d erforderlich, dass die Taktrate $clk_1$ der Signalerzeugungs-Einheit 11 exakt ihrem Sollwert $clk_{1,soll}$ entspricht. Daneben führt auch eine Abweichung der Abtastrate $clk_2$ von ihrem Sollwert $clk_{2,soll}$ zu einem entsprechenden Fehler bei der Bestimmung des von der Auswertungs-Einheit 13 ermittelten Abstandswertes d'. Ein Geräte-interner Abgleich der Taktrate $clk_1$ bzw. Abtastrate $clk_2$ auf den jeweiligen Sollwert $clk_{1,2soll}$ ist jedoch unter kommerziellen Gesichtspunkten nicht umsetzbar, da eine direkte Frequenz-Messung unter messtechnisch vertretbarem Aufwand nicht möglich ist. Vielmehr gibt es hardwaretechnisch lediglich die Möglichkeit, einzelne Frequenzen als Verhältnisse $V_{1,2} V_{1,ref}$ in Bezug zu festen Referenzfrequenzen $clk_{ref}$ zu bestimmen. Dabei ist es wiederum unter technisch vertretbarem Aufwand nicht möglich, eine eigene Referenzquelle mit der gewünschten Genauigkeit im Füllstandsmessgerät 1 zu integrieren.

Erfindungsgemäß umfasst das in Fig. 2 dargestellte Füllstandsmessgerät 1 daher eine Diagnose-Einheit 14, mittels der die Taktrate $clk_1$ der Signalerzeugungs-Einheit 11 und die Abtastrate $clk_2$ des Analog-/Digital-Wandlers 12 miteinander verglichen werden, indem gemäß

$$R_{2,1} = \frac{clk_2}{clk_1}$$

das Verhältnis $R_{2,1}$ der Taktrate $clk_1$ zur Abtastrate $clk_2$ ermittelt wird. Dabei kann das Verhältnis $R_{2,1}$ beispielsweise auf Basis zumindest eines digitalen Zählers ermittelt werden.

Anhand des ermittelten Verhältnisses $R_{2,1}$ berechnet die Diagnose-Einheit 14 gemäß

$$k_1 = R_{2,1} * \frac{clk_{1,soll}}{clk_{2,soll}}$$

einen ersten Kompensationsfaktor $k_1$. Dabei handelt es sich bei $clk_{1,2soll}$ um die jeweils bekannten Sollwerte $clk_{1/2,soll}$ der Taktrate $clk_1$ bzw. der Abtastrate $clk_2$. Der ermittelte erste Kompensationsfaktor $k_1$ kann der Auswertungs-Einheit 13 übermittelt werden, so dass sie den per FFT ermittelten Abstandswert d' gemäß

$$d = k_1 * d'$$

kompensiert, um hieraus wiederum den kompensierten Füllstandswert L zu bestimmen. Erfindungsgemäß werden zur Kompensation also die Taktrate $clk_1$ und die Abtastrate $clk_2$ relativ zueinander verglichen. Hierdurch werden etwaige Abweichungen der Raten $clk_1$, $clk_2$ von ihren Soll-Werten $clk_{1,2,soll}$ zumindest teilweise kompensiert, so dass hierdurch bedingte Messfehler minimiert werden.

Vorteilhaft an der erfindungsgemäßen Kompensation ist, dass hierfür keine externe, hochgenaue Referenz-Quelle hinzugezogen werden muss. Dementsprechend ist es möglich, dass das Füllstandsmessgerät 1 eine entsprechende Kompensation auch eigenständig nach dessen Fertigung durchführt. Eine entsprechende Kompensation kann bspw. in regelmäßigen Zyklen wiederkehrend während des Messbetriebs durchgeführt werden. Die wiederholte Neu-Bestimmung des ersten Kompensationsfaktors $k_1$ während oder zwischen fortlaufenden Füllstands-Messungen kann beispielsweise dazu genutzt werden, um die Funktionstüchtigkeit des Füllstandsmessgerätes 1 zu überprüfen. So kann das Füllstandsmessgerät 1 als funktionsuntüchtig definiert werden, sobald der erste Kompensationsfaktor $k_1$ über die fortlaufenden Füllstandsmessungen eine definierte Mindest-Änderung $\Delta k_1$ gegenüber dem Wert des ersten Kompensationsfaktors $k_1$, welcher zu bzw. vor Beginn des Messbetriebs ermittelt wurde, überschreitet.

Darüber hinaus kann durch eine (a-) zyklisch wiederkehrende Neubestimmung des ersten Kompensationsfaktors $k_1$ eine Rückführbarkeit des gemessenen Füllstandswertes L, bspw. gemäß der Normenreihe EN ISO 9001:2015 ermöglicht werden, sofern zusätzlich zum ersten Kompensationsfaktor $k_1$ ein Werks-Abgleich stattfindet. Dieser kann durchgeführt werden, indem die Taktrate $clk_1$ und/oder die Abtastrate $clk_2$ jeweils mit einer hochgenauen Referenzfrequenz $clk_{ref}$ einer externen Referenz-Quelle verglichen werden. In diesem Fall können gemäß

$$R_{1,ref} = \frac{clk_1}{clk_{ref}} \; ; \; R_{2,ref} = \frac{clk_2}{clk_{ref}}$$

wiederum Verhältnisse $R_{1,ref}$, $R_{2,ref}$ der Raten $clk_1$, $clk_2$ zur Referenzfrequenz ($clk_{ref}$) ermittelt werden. Auf deren Basis kann gemäß

$$k_2 = \left(\frac{clk_{1,soll}}{R_{1,ref} * clk_{ref}}\right)^2 \cdot \frac{R_{2,ref} * clk_{ref}}{clk_{2,soll}}$$

ein zweiter Kompensationsfaktor $k_2$ berechnet werden. Dabei ist es prinzipiell irrelevant, ob der zweite Kompensationsfaktor $k_2$ intern von der Diagnose-Einheit 14, oder extern berechnet wird. Im Falle interner Berechnung kann die Referenz-Frequenz $clk_{ref}$ der Diagnose-Einheit 14 bspw. über eine Fertigungs-Schnittstelle 18 eingeprägt werden. Im anderen Fall können die Taktrate $clk_1$ und die Abtastrate $clk_2$ bspw. über die Fertigungsschnittstelle 18 nach außen übertragen werden, so dass der zweite Kompensationsfaktor $k_2$ im Rahmen der Fertigung extern an einer entsprechenden Kompensations-Station ermittelt und im Anschluss über die Fertigungs-Schnittstelle 18 der Auswertungs-Einheit 13 übermittelt wird. Somit kann die Rückführbarkeit des kompensierten Abstandes d im fortschreitenden Messbetrieb des Füllstandsmessgerätes 1 gewährleistet werden, indem der erste Kompensationsfaktor $k_1$ fortlaufend mit dem zweiten Kompensationsfaktor $k_2$ verglichen wird.

Alternativ oder zusätzlich kann die Auswertungs-Einheit 13 des Füllstandsmessgerätes 1 den ermittelten Abstandswert d' ab Werk gemäß

$$d = k_2 * d'$$

kompensieren. Durch diese zusätzliche Kompensation ab Werk werden Messfehler bei der Füllstandsmessung weiter reduziert. In diesem Zusammenhang ist ebenso denkbar, dass der erste Kompensationsfaktor $k_1$ zumindest erstmalig im Rahmen der Fertigung nicht durch die Diagnose-Einheit 14 berechnet wird, sondern ebenfalls durch die externe Kompensations-Station.

**Bezugszeichenliste**

| 1 | Füllstandsmessgerät |
|---|---|
| 2 | Füllgut |
| 3 | Behälter |
| 4 | Übergeordnete Einheit |
| 10 | Antennen-Anordnung |
| 11 | Signalerzeugungs-Einheit |
| 12 | Analog-/Digital-Wandler |
| 13 | Auswertungs-Einheit |
| 14 | Diagnose-Einheit |
| 15 | Signal-Teiler |
| 16 | Sende-/Empfangs-Weiche |
| 17 | Mischer |
| 18 | Fertigungs-Schnittstelle |
| d | Abstand |
| $clk_{ref}$ | Referenzfrequenz |
| $clk_1$ | Taktrate |
| $clk_2$ | Abtastrate |
| $E_{HF}$ | Empfangs-Signal |
| h | Einbauhöhe |
| IF, $IF_d$ | Niederfrequentes Basissignal |
| $k_1$, $k_2$ | Kompensationsfaktoren |
| L | Füllstandswert |
| $S_{HF}$ | Hochfrequenz-Signal |
| $V_{1,2}$ $V_{1,ref}$ | Verhältnisse der Raten zueinander bzw. zur Referenzfrequenz |

**Patentansprüche**

1. FMCW-basiertes Füllstandsmessgerät zur Messung eines kompensierten Füllstandswertes (L) eines Füllgutes (2) in einem Behälter (3), umfassend:

   - Eine Antennen-Anordnung (10), mittels welcher ein Hochfrequenz-Signal ($S_{HF}$) gen Füllgut (2) sendbar und nach Reflektion an der Füllgut-Oberfläche als Empfangs-Signal ($E_{HF}$) empfangbar ist,
   - Eine Signalerzeugungs-Einheit (11), die ausgelegt ist, um das Hochfrequenz-Signal ($s_{HF}$) gemäß des FMCW-Prinzips mit Referenz zu einer definierten Taktrate ($clk_1$) zu erzeugen,
   - Einer Empfangs-Einheit (12), die ausgelegt ist,

      ∘ um das Empfangs-Signal ($E_{HF}$) gemäß des FMCW-Prinzips in ein niederfrequentes Basissignal (IF) herunterzumischen, und
      ∘ um das Basissignal (IF) mit einer definierten Abtastrate ($clk_2$) abzutasten,

   - eine Auswertungs-Einheit (13), die ausgelegt ist,

      ∘ um anhand des abgetasteten Basissignals ($IF_d$) einen Abstandswert (d) zum Füllgut (2) zu ermitteln, **dadurch gekennzeichnet, dass**
      die Auswertungs-Einheit (13) ausgelegt ist,
      ∘ um den Abstandswert (d) mittels eines ersten Kompensationsfaktors ($k_1$) und/oder eines zweiten Kompensationsfaktors ($k_2$) zu kompensieren, und
      ∘ um anhand des kompensierten Abstandswertes (d) den kompensierten Füllstandswert (L) zu bestimmen, und

   - eine Diagnose-Einheit (14), die ausgelegt ist, um

      ∘ den ersten Kompensationsfaktor ($k_1$) mittels Vergleich der Taktrate ($clk_1$) mit der Abtastrate ($clk_2$) zu ermitteln, und/oder
      ∘ um mittels Vergleich der Taktrate ($clk_1$) und/oder der Abtastrate ($clk_2$) mit einer Referenzfrequenz ($clk_{ref}$) und/oder dem ersten Kompensationsfaktor ($k_1$) den zweiten Kompensationsfaktor ($k_2$) zu ermitteln, und
      ∘ um den ersten Kompensationsfaktor ($k_1$) bzw. den zweiten Kompensationsfaktor ($k_2$) nach Ermittlung an die Auswertungs-Einheit (13) zu übertragen

   wobei die Taktrate ($clk_1$) und die Abtastrate ($clk_2$) miteinander verglichen werden, indem gemäß

$$R_{2,1} = \frac{clk_2}{clk_1}$$

   ein Verhältnis ($R_{2,1}$) der Raten ($clk_1$, $clk_2$) zueinander ermittelt wird, und wobei der erste Kompensationsfaktor ($k_1$) gemäß

$$k_1 = R_{2,1} * \frac{clk_{1,soll}}{clk_{2,soll}}$$

   berechnet wird, wobei es sich bei $clk_{1,2soll}$ um die jeweiligen Sollwerte $clk_{1,2soll}$ der Taktrate ($clk_1$) bzw. der Abtastrate ($clk_2$) handelt,
   wobei die Taktrate ($clk_1$) und die Abtastrate ($clk_2$) jeweils mit der Referenzfrequenz ($clk_{ref}$) verglichen werden, indem gemäß

$$R_{1,ref} = \frac{clk_1}{clk_{ref}} \; ; \; R_{2,ref} = \frac{clk_2}{clk_{ref}}$$

   Verhältnisse ($R_{1,ref}$, $R_{2,ref}$) der Raten ($clk_1$, $clk_2$) zur Referenzfrequenz ($clk_{ref}$) ermittelt werden, und wobei der zweite Kompensationsfaktor ($k_2$) gemäß

$$k_2 = \left( \frac{clk_{1,soll}}{R_{1,ref} * clk_{ref}} \right)^2 \cdot \frac{R_{2,ref} * clk_{ref}}{clk_{2,soll}}$$

berechnet wird, und
wobei der ermittelte Abstandswert (d') für $k_1$ bzw. $k_2$ gemäß

$$d = k_{1,2} * d'$$

kompensiert wird.

2. Füllstandsmessgerät nach Anspruch 1, wobei das Füllstandsmessgerät (1) zur Übertragung des ersten Kompensationsfaktors ($k_1$), des zweiten Kompensationsfaktors ($k_2$), der Taktrate ($clk_1$), der Abtastrate ($clk_2$) und/oder einer externen Referenzfrequenz ($clk_{ref}$) über eine Fertigungs-Schnittstelle (18) verbindbar ist.

3. Füllstandsmessgerät nach Anspruch 1 oder 2, wobei die Signalerzeugungs-Einheit (11) als Phasenregelschleife realisiert ist.

4. Füllstandsmessgerät nach einem der vorhergehenden Ansprüche, wobei die Auswertungs-Einheit (13) ausgelegt ist, den Abstandswert (d) mittels einer Fourier-Transformation des abgetasteten Basissignals ($IF_d$) zu ermitteln.

5. Verfahren zur Kompensation eines Füllstandsmessgerätes (1) nach einem der vorhergehenden Ansprüche, folgende Verfahrensschritte umfassend:

   - Ermittlung des ersten Kompensationsfaktors ($k_1$) durch Vergleich der Taktrate ($clk_1$) mit der Abtastrate ($clk_2$), und/oder
   - Ermittlung des zweiten Kompensationsfaktors ($k_2$) durch Vergleich der Taktrate ($clk_1$) und/oder der Abtastrate ($clk_2$) mit der Referenzfrequenz ($clk_{ref}$),
   wobei die Taktrate ($clk_1$) und die Abtastrate ($clk_2$) miteinander verglichen werden, indem gemäß

$$R_{2,1} = \frac{clk_2}{clk_1}$$

ein Verhältnis ($R_{2,1}$) der Raten ($clk_1$, $clk_2$) zueinander ermittelt wird, und wobei der erste Kompensationsfaktor ($k_1$) gemäß

$$k_1 = R_{2,1} * \frac{clk_{1,soll}}{clk_{2,soll}}$$

berechnet wird, wobei es sich bei $clk_{1,2soll}$ um die jeweiligen Sollwerte $clk_{1,2soll}$ der Taktrate ($clk_1$) bzw. der Abtastrate ($clk_2$) handelt, und
wobei die Taktrate ($clk_1$) und die Abtastrate ($clk_2$) jeweils mit der Referenzfrequenz ($clk_{ref}$) verglichen werden, indem gemäß

$$R_{1,ref} = \frac{clk_1}{clk_{ref}} \; ; \; R_{2,ref} = \frac{clk_2}{clk_{ref}}$$

Verhältnisse ($R_{1,ref}$, $R_{2,ref}$) der Raten ($clk_1$, $clk_2$) zur Referenzfrequenz ($clk_{ref}$) ermittelt werden, und wobei der zweite Kompensationsfaktor ($k_2$) gemäß

$$k_2 = \left( \frac{clk_{1,soll}}{R_{1,ref} * clk_{ref}} \right)^2 \cdot \frac{R_{2,ref} * clk_{ref}}{clk_{2,soll}}$$

berechnet wird, und
wobei der ermittelte Abstandswert (d') für $k_1$ bzw. $k_2$ gemäß

$$d = k_{1,2} * d'$$

kompensiert wird.

6. Verfahren nach Anspruch 5, wobei der erste Kompensationsfaktor ($k_1$) während fortlaufender Füllstands-Messungen wiederkehrend ermittelt wird, und wobei das Füllstandsmessgerät (1) als funktionstüchtig eingestuft wird, solange der erste Kompensationsfaktor ($k_1$) über die fortlaufen Füllstandsmessungen eine Mindest-Änderung ($\Delta k_1$) nicht überschreitet.

7. Verfahren nach Anspruch 5, wobei der zweite Kompensationsfaktor ($k_2$) während der Fertigung des Füllstandsmessgerätes (1) mittels Vergleich der Taktrate ($clk_1$) und/oder der Abtastrate ($clk_2$) mit der Referenzfrequenz ($clk_{ref}$) einer externen Referenz-Quelle ermittelt wird.

8. Verfahren nach Anspruch 7, wobei der zweite Kompensationsfaktor ($k_2$) durch eine externe Einheit berechnet wird, und wobei der Kompensationsfaktor ($k_2$) der Auswertungs-Einheit (13) über die Fertigungs-Schnittstelle (18) übertragen wird.

9. Verfahren nach Anspruch 7, wobei die Referenzfrequenz ($clk_{ref}$) über die Fertigungs-Schnittstelle (18) auf die Analyse-Einheit (14) übertragen wird, und wobei der zweite Kompensationsfaktor ($k_2$) durch die Analyse-Einheit (14) berechnet wird.


**Claims**

1. A FMCW-based fill level measuring device for measuring a compensated fill level value (L) of a filling material (2) in a container (3), comprising:

   - An antenna assembly (10) with which a high-frequency signal ($S_{HF}$) can be sent toward the filling material (2) and can be received as a receive signal ($E_{HF}$) after reflection on the surface of the filling material,
   - a signal generating unit (11) which is configured to generate the high-frequency signal ($S_{HF}$) according to the FMCW principle with reference to a defined cycle rate ($clk_1$),
   - a receiver unit (12) which is configured

      ○ to downmix the receive signal ($E_{HF}$) according to the FMCW principle into a low-frequency basic signal (IF) and
      ○ to sample the basic signal (IF) with a defined sampling rate ($clk_2$),

   - an evaluation unit (13) which is configured to

      ○ determine a distance value (d) from the filling material (2) based on the sampled basic signal ($IF_d$),
      **characterized in that**
      the evaluation unit (13) is configured
      ○ to compensate for the distance value (d) by means of a first compensation factor ($k_1$) and/or a second compensation factor ($k_2$) and
      ○ to determine the compensated fill level value (L) based on the compensated distance value (d), and

   - a diagnostics unit (14) which is configured

      ○ to determine the first compensation factor ($k_1$) by comparing the cycle rate ($clk_1$) with the sampling rate ($clk_2$) and/or
      ○ to determine the second compensation factor ($k_2$) by comparing the cycle rate ($clk_1$) and/or the sampling rate ($clk_2$) with a reference frequency ($clk_{ref}$) and/or the first compensation factor ($k_1$), and
      ○ to transmit the first compensation factor ($k_1$) and/or the second compensation factor ($k_2$) to the evaluation unit (13) once it has/they have been determined,

   wherein the cycle rate ($clk_1$) and the sampling rate ($clk_2$) are compared with each other by determining a ratio ($R_{2,1}$) of the rates ($clk_1$, $clk_2$) relative to each other in accordance with [note: add in formula here] and wherein the

first compensation factor ($k_1$) is calculated in accordance with [note: add in formula here]

$$k_1 = R_{2,1} * \frac{clk_{1,soll}}{clk_{2,soll}}$$

wherein $clk_{1,2soll}$ represents the respective target values $clk_{1,2soll}$ for the cycle rate ($clk_1$) and/or the sampling rate ($clk_2$),

wherein the cycle rate ($clk_1$) and the sampling rate ($clk_2$) are each compared with the reference frequency ($clk_{ref}$) by determining ratios ($R_{1,ref}$, $R_{2,ref}$) between the rates ($clk_1$, $clk_2$) and the reference frequency ($clk_{ref}$) in accordance with [note: add in formula here]

$$R_{1,ref} = \frac{clk_1}{clk_{ref}} \; ; \; R_{2,ref} = \frac{clk_2}{clk_{ref}}$$

and wherein the second compensation factor ($k_2$) is calculated in accordance with [note: add in formula here]

$$k_2 = \left(\frac{clk_{1,soll}}{R_{1,ref} * clk_{ref}}\right)^2 \cdot \frac{R_{2,ref} * clk_{ref}}{clk_{2,soll}}$$

and

wherein the distance value (d') that is determined for $k_1$ and/or $k_2$ is compensated for in accordance with [note: add in formula here].

$$d = k_{1,2} * d'$$

2. The fill level measuring device as claimed in claim 1, wherein the fill level measuring device (1) can be connected to transmit the first compensation factor ($k_1$), the second compensation factor ($k_2$), the cycle rate ($clk_1$), the sampling rate ($clk_2$), and/or an external reference frequency ($clk_{ref}$) via a manufacturing interface (18).

3. The fill level measuring device as claimed in claim 1 or 2, wherein the signal generating unit (11) is configured as a phase-locked loop.

4. The fill level measuring device as claimed in one of the preceding claims, wherein the evaluation unit (13) is configured to determine the distance value (d) by means of a Fourier transform of the sampled basic signal ($IF_d$).

5. A method for compensating for a fill level measuring device (1) as claimed in one of the preceding claims, comprising the following process steps:

- Determining the first compensation factor ($k_1$) by comparing the cycle rate ($clk_1$) with the sampling rate ($clk_2$) and/or
- determining the second compensation factor ($k_2$) by comparing the cycle rate ($clk_1$) and/or the sampling rate ($clk_2$) with the reference frequency ($clk_{ref}$),
wherein the cycle rate ($clk_1$) and the sampling rate ($clk_2$) are compared with each other by determining a ratio ($R_{2,1}$) of the rates ($clk_1$, $clk_2$) relative to each other in accordance with [note: add formula here]

$$R_{2,1} = \frac{clk_2}{clk_1}$$

and wherein the first compensation factor ($k_1$) is calculated in accordance with [note: add in formula here]

$$k_1 = R_{2,1} * \frac{clk_{1,soll}}{clk_{2,soll}}$$

wherein $clk_{1,2soll}$ represents the respective target values $clk_{1,2soll}$ for the cycle rate ($clk_1$) and/or the sampling rate ($clk_2$), and

wherein the cycle rate ($clk_1$) and the sampling rate ($clk_2$) are each compared with the reference frequency ($clk_{ref}$) by determining ratios ($R_{1,ref}$, $R_{2,ref}$) between the rates ($clk_1$, $clk_2$) and the reference frequency ($clk_{ref}$) in accordance with [note: add in formula here]

$$R_{1,ref} = \frac{clk_1}{clk_{ref}} \; ; \; R_{2,ref} = \frac{clk_2}{clk_{ref}}$$

and wherein the second compensation factor ($k_2$) is calculated in accordance with [note: add in formula here]

$$k_2 = \left( \frac{clk_{1,soll}}{R_{1,ref} * clk_{ref}} \right)^2 \cdot \frac{R_{2,ref} * clk_{ref}}{clk_{2,soll}}$$

and

wherein the distance value ($d'$) that is determined for k and/or $k_2$ is compensated for in accordance with [note: add in formula here].

$$d = k_{1,2} * d'$$

6. The method as claimed in claim 5, wherein the first compensation factor ($k_1$) is determined on a recurring basis during continuous fill level measurements, and wherein the fill level measuring device (1) is deemed to be functional as long as the first compensation factor ($k_1$) does not exceed a minimum change ($\Delta k_1$) throughout the continuous fill level measurements.

7. The method as claimed in claim 5, wherein the second compensation factor ($k_2$) is determined during production of the fill level measuring device (1) by comparing the cycle rate ($clk_1$) and/or the sampling rate ($clk_2$) with the reference frequency ($clk_{ref}$) of an external reference source.

8. The method as claimed in claim 7, wherein the second compensation factor ($k_2$) is calculated by an external unit, and wherein the compensation factor ($k_2$) is transmitted to the evaluation unit (13) via the manufacturing interface (18).

9. The method as claimed in claim 7, wherein the reference frequency ($clk_{ref}$) is transmitted to the analysis unit (14) via the manufacturing interface (18), and wherein the second compensation factor ($k_2$) is calculated by the analysis unit (14).

**Revendications**

1. Transmetteur de niveau basé sur la technologie FMCW, lequel est destiné à la mesure d'une valeur de niveau compensée (L) d'un produit (2) dans un réservoir (3), lequel transmetteur comprend :

- un dispositif d'antenne (10) au moyen duquel un signal haute fréquence ($S_{HF}$) peut être émis vers le produit (2) et peut être reçu comme signal de réception ($E_{HF}$) après réflexion sur la surface du produit,
- une unité de génération de signaux (11), laquelle est conçue pour générer le signal haute fréquence ($s_{HF}$) selon le principe FMCW avec référence à une fréquence d'horloge définie ($clk_1$),
- une unité de réception, laquelle est conçue

    ◦ pour abaisser le signal de réception ($E_{HF}$) selon le principe FMCW en un signal de base à basse fréquence (IF) et
    ◦ pour échantillonner le signal de base (IF) à une fréquence d'échantillonnage définie ($clk_2$),

- une unité d'évaluation (13), laquelle est conçue

∘ pour déterminer une valeur de distance (d) par rapport au produit (2) à l'aide du signal de base ($IF_d$) échantillonné,
**caractérisé en ce que**
l'unité d'évaluation (13) est conçue
∘ pour compenser la valeur de distance (d) au moyen d'un premier facteur de compensation ($k_1$) et/ou d'un deuxième facteur de compensation ($k_2$), et
∘pour déterminer la valeur de niveau compensée (L) à l'aide de la valeur de distance compensée (d), et

- une unité de diagnostic, laquelle est conçue

∘ pour déterminer le premier facteur de compensation ($k_1$) au moyen d'une comparaison de la fréquence d'horloge ($clk_1$) avec la fréquence d'échantillonnage ($clk_2$), et/ou
∘ pour déterminer le deuxième facteur de compensation ($k_2$) au moyen d'une comparaison de la fréquence d'horloge ($clk_1$) et/ou de la fréquence d'échantillonnage ($clk_2$) avec une fréquence de référence ($clk_{ref}$) et/ou le premier facteur de compensation ($k_1$), et
∘ pour transmettre à l'unité d'évaluation (13) le premier facteur de compensation ($k_1$) ou le deuxième facteur de compensation ($k_2$) après détermination,

la fréquence d'horloge ($clk_1$) et la fréquence d'échantillonnage ($clk_2$) étant comparées entre elles **en ce que**, conformément à

$$R_{2,1} = \frac{clk_2}{clk_1}$$

on détermine un rapport ($R_{2,1}$) entre les fréquences ($clk_1$, $clk_2$), et le premier facteur de compensation ($k_1$) étant calculé conformément à

$$k_1 = R_{2,1} * \frac{clk_{1,soll}}{clk_{2,soll}}$$

$clk_{1,2soll}$ étant les valeurs de consignes respectives de la fréquence d'horloge ($clk_1$) et de la fréquence d'échantillonnage ($clk_2$), et
la fréquence d'horloge ($clk_1$) et la fréquence d'échantillonnage ($clk_2$) étant respectivement comparées à la fréquence de référence ($clk_{ref}$), en déterminant, conformément à

$$R_{1,ref} = \frac{clk_1}{clk_{ref}} \; ; \; R_{2,ref} = \frac{clk_2}{clk_{ref}},$$

des rapports ($R_{1,ref}$, $R_{2,ref}$) des fréquences ($clk_1$, $clk_2$) à la fréquence de référence ($clk_{ref}$), et le deuxième facteur de compensation ($k_2$) étant calculé conformément à

$$k_2 = \left( \frac{clk_{1,soll}}{R_{1,ref} * clk_{ref}} \right)^2 \cdot \frac{R_{2,ref} * clk_{ref}}{clk_{2,soll}}$$

et
la valeur de distance (d') déterminée pour $k_1$ ou $k_2$ étant compensée conformément à

$$d = k_{1,2} * d'.$$

2. Transmetteur de niveau selon la revendication 1, pour lequel le transmetteur de niveau (1) peut être relié via une interface de fabrication (18) pour transmettre le premier facteur de compensation ($k_1$), le deuxième facteur de compensation ($k_2$), la fréquence d'horloge ($clk_1$), la fréquence d'échantillonnage ($clk_2$) et/ou une fréquence de référence externe ($clk_{ref}$).

3. Transmetteur de niveau selon la revendication 1 ou 2, pour lequel l'unité de génération de signaux (11) est réalisée sous forme de boucle à verrouillage de phase.

4. Transmetteur de niveau selon l'une des revendications précédentes, pour lequel l'unité d'évaluation (13) est conçue pour déterminer la valeur de distance (d) au moyen d'une transformation de Fourier du signal de base échantillonné ($IF_d$).

5. Procédé destiné à la compensation d'un transmetteur de niveau (1) selon l'une des revendications précédentes, lequel procédé comprend les étapes suivantes :

   - Détermination du premier facteur de compensation ($k_1$) par comparaison de la fréquence d'horloge ($clk_1$) avec la fréquence d'échantillonnage ($clk_2$), et/ou
   - Détermination du deuxième facteur de compensation ($k_2$) par comparaison de la fréquence d'horloge ($clk_1$) et/ou de la fréquence d'échantillonnage ($clk_2$) avec la fréquence de référence ($clk_{ref}$), la fréquence d'horloge ($clk_1$) et la fréquence d'échantillonnage ($clk_2$) étant comparées l'une à l'autre en ce que, conformément à

$$R_{2,1} = \frac{clk_2}{clk_1}$$

on détermine un rapport ($R_{2,1}$) entre les fréquences ($clk_1$, $clk_2$), et le premier facteur de compensation ($k_1$) étant calculé conformément à

$$k_1 = R_{2,1} * \frac{clk_{1,soll}}{clk_{2,soll}}$$

$clk_{1,2soll}$ étant les valeurs de consignes respectives de la fréquence d'horloge ($clk_1$) et de la fréquence d'échantillonnage ($clk_2$), et
la fréquence d'horloge ($clk_1$) et la fréquence d'échantillonnage ($clk_2$) étant respectivement comparées à la fréquence de référence ($clk_{ref}$), en déterminant, conformément à

$$R_{1,ref} = \frac{clk_1}{clk_{ref}} \; ; \; R_{2,ref} = \frac{clk_2}{clk_{ref}},$$

des rapports ($R_{1,ref}$, $R_{2,ref}$) des fréquences ($clk_1$, $clk_2$) à la fréquence de référence ($clk_{ref}$), et le deuxième facteur de compensation ($k_2$) étant calculé conformément à

$$k_2 = \left( \frac{clk_{1,soll}}{R_{1,ref} * clk_{ref}} \right)^2 \cdot \frac{R_{2,ref} * clk_{ref}}{clk_{2,soll}}$$

et
la valeur de distance (d') déterminée pour $k_1$ ou $k_2$ étant compensée conformément à

$$d = k_{1,2} * d'.$$

6. Procédé selon la revendication 5,

   pour lequel le premier facteur de compensation ($k_1$) est déterminé de manière répétitive pendant des mesures de niveau continues, et
   pour lequel le transmetteur de niveau (1) est considéré comme fonctionnant tant que le premier facteur de compensation ($k_1$) ne dépasse pas une variation minimale ($\Delta k_1$) pendant les mesures de niveau continues.

7. Procédé selon la revendication 5, pour lequel le deuxième facteur de compensation ($k_2$) est déterminé pendant la fabrication du transmetteur de niveau (1) par comparaison de la fréquence d'horloge ($clk_1$) et/ou de la fréquence

d'échantillonnage (clk$_2$) avec la fréquence de référence (clk$_{ref}$) d'une source de référence externe.

8. Procédé selon la revendication 7,

pour lequel le deuxième facteur de compensation (k$_2$) est calculé par une unité externe, et
pour lequel le facteur de compensation (k$_2$) est transmis à l'unité d'évaluation (13) via l'interface de fabrication (18).

9. Procédé selon la revendication 7,

pour lequel la fréquence de référence (clk$_{ref}$) est transmise à l'unité d'analyse (14) par l'intermédiaire de l'interface de fabrication (18), et
pour lequel le deuxième facteur de compensation (k$_2$) est calculé par l'unité d'analyse (14).

Fig. 1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6014100 A

**In der Beschreibung aufgeführte Nicht-Patentliteratur**

- **PETER DEVINE**. *Radar Level Detection*, 2000